(19) Europäisches Patentamt
European Patent Office
Office européen des brevets

(11) Numéro de publication: **0 010 040**
**B1**

(12) **FASCICULE DE BREVET EUROPEEN**

(45) Date de publication du fascicule du brevet: **13.04.83**

(51) Int. Cl.³: **H 04 N 7/04** //H04N5/76

(21) Numéro de dépôt: **79400694.0**

(22) Date de dépôt: **28.09.79**

(54) **Procédé de transmission d'un signal analogique audiofréquence pendant les intervalles de synchronisation de ligne-trame d'un signal de télévision et dispositif de mise en oeuvre de ce procédé.**

(30) Priorité: **05.10.78 FR 7828521**

(43) Date de publication de la demande:
**16.04.80 Bulletin 80/8**

(45) Mention de la délivrance du brevet:
**13.04.83 Bulletin 83/15**

(84) Etats contractants désignés:
**DE GB IT NL SE**

(56) Documents cités:
**DE - A - 2 818 704**
**FR - A - 2 113 933**
**GB - A - 1 268 136**

(73) Titulaire: **THOMSON-CSF**
**173, Boulevard Haussmann**
**F-75379 Paris Cedex 08 (FR)**

(72) Inventeur: **Kergosien, Jean-Marc**
**"THOMSON-CSF" - SCPI 173, bld. Haussmann**
**F-75360 Paris Cedex 08 (FR)**
Inventeur: **Le Carvennec, François**
**"THOMSON-CSF" - SCPI 173, bld. Haussmann**
**F-75360 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

**EP 0 010 040 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé de transmission d'un signal analogique audiofréquence pendant les intervalles de synchronisation de ligne-trame d'un signal de télévision et dispositif de mise en oeuvre de ce procédé

L'invention se rapporte à la transmission d'un signal analogique audiofréquence pendant les intervalles de synchronisation d'une signal de télévision en vue notamment de son stockage dans un disque vidéo contenant par ailleurs la partie informationnelle de ce signal de télévision.

Il est connu d'utiliser l'espace de temps réservé aux impulsions de synchronisation de ligne et de trame en y insérant des signaux binaires de service comme des numéros d'image, des signaux de test, des signaux caractéristiques du programme de télévision, etc. Il est également connu de transmettre pendant chaque palier de suppression du signal vidéo une impulsion modulée en amplitude par un signal basse-fréquence traduisant l'accompagnement sonore de l'image de télévision. Dans le cas de l'enregistrement d'un programme de télévision sur un support d'information tel qu'un vidéodisque, il est intéressant de disposer d'un signal vidéo d'une part et du signal audio d'autre part sur deux voies séparées, ce qui permet d'éviter toute intermodulation et éventuellement de choisir (pour un même programme vidéo) entre plusieurs programmes audio comportant par exemple, soit différents accompagnements musicaux, soit de la parole en plusieurs langues. Lorsque le disque le permet, on peut envisager d'inscrire d'abord le signal vidéo puis ultérieurement le signal audio choisi. On peut aussi effectuer un multiplexage des deux types de signaux et les inscrire simultanément. Il est également connu, de par la publication GB—A—1 268 136, de convertir les signaux audio, de type analogique, en signaux numériques enregistrés pendant les intervalles de synchronisation de ligne d'un signal de télévision. Le signal analogique est échantillonné et converti en mots codés de n bits se succédant à une fréquence double de la fréquence ligne qui sont mélangés au signal de télévision pour former un signal composite. Au décodage, le signal de télévision est extrait et les mots de n bits sont reconvertis en signaux analogiques.

Quelque soit le type de signaux audio, analogiques ou numériques, enregistrés dans les intervalles de synchronisation, les effets parasites dus aux inévitables évanoussements, pertes d'informations, bruits, etc, ne peuvent être évités. Or, la sensibilité de l'oreille humaine à ces effets est très grande.

L'invention vise un procédé de codage-décodage du son sous la forme d'échantillons numériques, introduisant une redondance en vue de pallier les inconvénients d'une mauvaise réception. Le procédé de codage-décodage peut également s'appliquer à un programme autre qu'un programme sonore se situant dans la gamme audio-fréquence. Une des particularités du procédé de codage-décodage est la transmission différée des différentes représentations d'un même échantillon et de décorreller les différentes transmissions, ce qui permet d'allonger la tolérance sur la durée des évanouissements, donc de diminuer la probabilité d'erreurs dues aux évanouissements non corrigées lors du décodage. Une autre particularité de l'invention est d'être compatible avec la diffusion d'autres signaux numériques que les échantillons sonores, comme les signaux de service cités plus haut. L'invention ne se limite pas à l'utilisation de supports d'informations tels que le vidéodisque. Elle s'applique également à tout mode de transmission ou de stockage initialement prévu pour un signal de télévision.

L'invention a donc pour objet un procédé de transmission d'un signal analogique audiofréquence pendant les intervalles de synchronisation de ligne d'un signal de télévision, le procédé de transmission comportant une phase de codage et une phase de décodage; la phase de codage comprenant une étape de prise d'échantillons du signal analogique et de conversion analogique-numérique de ces échantillons en mots successifs de n bits se succédant à une fréquence double de la fréquence ligne, n étant un nombre entier, et une étape de formation d'un signal de télévision composite; la phase de décodage comprenant une étape d'extraction du signal de télévision une étape de reconstitution d'impulsions de synchronisation et une étape de conversion numérique-analogique des mots numériques; procédé caractérisé en ce que la phase de codage comprend en outre les étapes suivants:

— mémorisation de quatre suites de n bits appartenant à au moins quatre mots de n bits.
— émission, pendant chaque impulsion de synchronisation de ligne d'une séquence de quatre suites d n bits appartenant à au moins quatre mots issus de ladite conversion analogique-numérique d'échantillons différents; tous les bits d'un mot issu de la conversion analogique-numérique étant émis à un emplacement déterminé d'une première séquence et émis au moins une deuxième fois, en tout ou partie, à un emplacement différent d'une deuxième séquence;
— émission en début de chaque impulsion de synchronisation avant la séquence de quatre suites de n bits d'une séquence de reconnaissance constituée d'un mot prédéterminé de p bit;
— et multiplexage des séquences de quatre

suites de n bits avec le signal de télévision sans impulsions de synchronisation pour former ledit signal de télévision composite;

et en ce que la phase de décodage comprend en outre les étapes suivantes:

— détection de ladite séquence de reconnaissance conditionnant ladite étape d'extraction;
— mémorisation des séquences suivant les séquences de reconnaissance, par ordre d'arrivée, la capacité de mémorisation étant égale à quatre séquences;
— comparaisons deux à deux de tout ou partie des différents bits émis dans au moins deux séquences et appartenant à des mots issus de la conversion analogique-numérique de mêmes échantillons, lesdites comparaisons s'effectuant sur une paire de mots issus de la conversion analogique-numérique de deux échantillons successifs;
— choix d'un des deux mots de ladite paire en cas de résultats de comparaisons positifs ou du mot choisi lors de la comparaison précédante en cas de résultats de comparaisons négatifs et mémorisation des nouveaux mots choisis; lesdits mots choisi étant convertis en signaux analogiques

lors de ladite étape de conversion numérique-analogique;

— reconstitution des impulsions de synchronisation et mélange avec ledit signal de télévision extrait.

L'invention a également pour objet un dispositif de mise en oeuvre de ce procédé selon les revendications 6 ou 7.

L'invention sera mieux comprise et d'autres caractéristiques apparaîtront au moyen de la description ci-après et du dessin qui l'accompagne dans lequel:

la figure 1 est un diagramme représentatif de l'allure d'un signal de télévision en fonction du temps;

la figure 2 est un diagramme représentatif de l'allure d'un signal de télévision pendant la suppression de trame, dans le standard européen;

la figure 3 est un schéma de codeur pour la mise en oeuvre du procédé de transmission selon l'invention;

la figure 4 représente une série de chronogrammes des différents signaux de synchronisation utilisés dans le codeur de la figure 3;

la figure 5 est un schéma de décodeur adapté au codeur de la figure 3;

la figure 6 représente un variante de réalisation du codeur;

la figure 7 représente un série de chronogrammes des différents signaux de synchronisation utilisés dans le codeur de la figure 6.

La figure 1 est un diagramme représentatif de l'allure d'un signal de télévision en fonction du temps. Ce signal résulte de la superposition, en des instants bien déterminés, d'un signal vidéo-composite LC résultant de la superposition des signaux de luminance et de chrominance modulés en fréquence avec des sous-porteuses différentes, d'un signal de suppression SU séparant les lignes les unes des autres et d'un signal de synchronisation de ligne constitué d'impulsions 100 s'insérant dans les paliers de suppression. Dans le cas du standard européen, la durée d'une ligne, $\theta_L$, vaut 64 $\mu$s et la durée des impulsions 100, $\theta_{SL}$, vaut environ 4,7 $\mu$s. A la fin de chaque demi-image et au début de la demi-image suivante, le signal de luminance est supprimé pendant 25 lignes. L'allure du signal de télévision pendant la suppression de trame, dans le standard européen, est représentée sur la figure 2. Il comprend un premier palier d'égalisation $P_1$ pendant 2,5 lignes formé uniquement d'impulsions 200 de même polarité que les impulsions 100 de largeur moitié et de fréquence double. On a ensuite le signal de synchronisation de trame ST de durée 2,5 $\theta_L$ formé d'impulsions 300 de polarité opposée aux précédentes et de même fréquence, de largeur $\mu_{SL}$. On a ensuite un deuxième palier d'égalisation $P_2$ semblable au palier $P_1$. La suite de la période de suppression de trame, SUP, est constituée de 17,5 lignes qui comprennent uniquement des impulsions de synchronisation de ligne de type 100. Dans le cas de la figure où les impulsions de type 100 sont de polarité négative, un détecteur de fronts descendants "voit", pendant les paliers $P_1$ et $P_2$ et le signal ST, 15 fronts descendants avec une période

$$\frac{\theta_L}{2}.$$

En dehors de ces trois périodes, il "voit" des fronts descendants avec une période $\theta_L$. Un tel détecteur peut permettre le déclenchement d'un organe codeur qui génère alors une séquence numérique provenant d'informations que l'on désire transmettre, pendant une durée inférieure ou égale à $\theta_{SL}$ lors des impulsions de type 100, inférieure ou égale à

$$\frac{\theta_{SL}}{2}$$

pendant les paliers d'égalisation, et inférieure ou égale à

$$\theta_T = \frac{\theta_L}{2} - \theta_{SL}$$

pendant le signal ST. Un organe mélangeur peut alors fournir au canal prévu un signal multiplex

comportant le signal vidéo, excepté les impulsions de synchronisation qui n'apportent pas d'informations, et les séquences numériques. Les informations numériques peuvent être de divers types; signaux de service, signaux de numéros d'image, provenant par exemple d'un compteur recevant les signaux de synchonisation de trame extraits du signal de télévision, sons codés par exemple en modulation par impulsion et codage (diete MIC). On peut évaluer le débit binaire qu'il est possible de transmettre ainsi, connaissant la capacité du canal; un canal vidéo classique a une bande passante de 6 MHz. On peut considérer que l'on peut transmettre 8,5 M bits/s, soit 40 bits pendant la durée d'une impulsion de synchronisation de ligne de type 100.

La figure 3 est un schéma de codeur pour l'une des utilisations possibles de l'invention. Il s'agit du cas où l'on désire transmettre pendant la durée d'un impulsion de ligne un signal sonore échantillonné à raison de deux échantillons de 8 bits par ligne. La fréquence d'échantillonnage est ainsi égale au double de la fréquence ligne f qui vaut 15625 Hz, donc suffisante pour transmettre les sons situés dans une bande 0—15 kHz. Etant donné le débit binaire qu'il est possible d'atteindre (au moins 40 bits par ligne), il est prévu d'établir une redondance des échantillons sonores égale à 2. Pendant la durée d'une impulsion de ligne, 32 bits seront des bits sonores et les 8 ou plus bits restants serviront à transmettre des informations diverses: Au début de chaque séquence numérique N, il est prévu de transmettre une séquence de reconnaissance de 8 bits permettant, lors de la réception, de détecter le début de la séquence N et également de distinguer entre les deux types de séquence possibles selon qu'elle remplace une impulsion de type 100, 200, 300 ou une impulsion de type 400, les séquences du deuxième type étant plus longues. De plus, dans le cas de ces dernières, après les bits sonores, il est prévu de transmettre des signaux de service divers, notamment une configuration binaire représentative du numéro d'image. Le codeur représenté sur la figure comprend une source 101 de signaux de télévision du type de ceux représentés sur les figures 1 et 2, une source de signaux sonores 102 et différentes sources de signaux numériques. Il délivre un signal multiplex C. La source 101 fournit un signal de télévision T qui peut être modulé en fréquence sur une porteuse principale. Dans ce cas, le signal multiplex peut être utilisé tel quel pour la transmission ou le stockage, par exemple sur un disque vidéo, le son se trouvant inscrit sur le disque sous forme numérique en lieu et place des impulsions de synchonisation. Si, par contre, le signal de télévision T n'est pas encore modulé, le signal multiplex C passera dans un modulateur de fréquence avant d'être utilisé. Une source 102 fournit un signal sonore SON qui est appliqué à un convertisseur analogique-numérique 13 émettant des mots $N_S$ de 8 bits à la fréquence 2f. Le convertisseur 13 est synchronisé par un signal d'horloge $H_2$ de fréquence 2f. Les sources de signaux numériques comprennent:

- un générateur de mots 14 émettant un mot de reconnaissance $N_R$ de 8 bits,
- un dispositif 15, par exemple un compteur, émettant une configuration binaire $N_n$ représentative du numéro d'image. Le compteur 15 est déclenché par le signal de synchronisation de trame $H_T$,
- éventuellement, d'autres sources de signaux binaires, comme la source 16, éttant des bits de service $N_e$.

Les mots $N_n$ et $N_e$ ne sont transmis que pendant les impulsions de type 400, reconnues à la réception grâce au mot de reconnaissance $N_R$.

Les liaisons entre les différents éléments du codeur sont représentées avec un trait simple lorsqu'il s'agit d'une liaison unique véhiculant un seul signal analogique ou un seul bit. Elles sont représentées avec un trait double lorsqu'il s'agit en fait de plusieurs liaisons véhiculant plusieurs bits en parallèle formant des mots. Le codage porte essentiellement sur les signaux $N_S$ provenant du convertisseur 13. Les mots de n bits de chaque échantillon émis à la fréquence 2f chargent alternativement deux registres à décalage de 8 bits $T_8$ et $T_7$ sous l'influence d'un portier 17 synchronisé par un signal carré H de fréquence f, ce qui permet d'obtenir un chargement par ligne de chaque registre $T_8$ et $T_7$. L'instant de chargement est déterminé par une horloge $H_c$, de fréquence 2f. Les registres $T_8$ et $T_7$ font partie d'une série de 8 registres $T_8$, $T_7$, ... $T_1$ successivement reliés les uns aux autres dans cet ordre et dont les décalages sont commandés par un signal d'horloge $H_D$ composée d'un train de 16 impulsions par ligne, ce qui permet de transférer la totalité des bits chargés dans deux registres $T_i$ et $T_{i-1}$ respectivement dans les registres $T_{i-2}$ et $T_{i-3}$. Les registres $T_8$ et $T_7$, notamment, sont totalement déchargés avant tout nouveau chargement. Les mots contenus dans les huit registres $T_1$ à $T_8$ sont multiplexés dans un organe multiplexeur 19 synchronisé par une horloge $H_3$ de fréquence

$$\frac{f}{2},$$

comportant huit entrées de mots et quatre sorties de mots A, B, C, D, et fonctionnant de la façon suivante: Pendant la durée d'une ligne, les sorties A, B, C, D sont respectivement reliées aux sorties des registres $T_8$, $T_4$, $T_6$, $T_2$. Pendant la durée de la ligne suivante, les sorties A, B, C, D sont respectivement reliées aux sorties des registres $T_7$, $T_3$, $T_5$, $T_1$. Les mots présents sur les sorties A, B, C, D chargent respectivement des

registres à décalage de 8 bits $R_A$, $R_B$, $R_C$, $R_D$. Par ailleurs, les mots de reconnaissance $N_R$ chargent un registre de décalage de 8 bits $R_R$ et éventuellement les mots $N_n$ et $N_e$ chargent un registre $R_N$. Les registres $R_N$, $R_A$, $R_B$, $R_C$, $R_D$, $R_R$ sont reliés en série dans cet ordre. Leur chargement est synchronisé par une horloge $H_E$ de fréquence f et leurs décalages sont synchronisés par un signal d'horloge $H_F$ constitué par un train de n impulsions commençant au début d'une impulsion de synchronisation, n étant le nombre maximal de bits que l'on désire transmettre pendant les impulsions de synchronisation du type 200, la durée du train étant telle que 40 impulsions occupent au maximum 4,7 $\mu$s Ainsi, la sortie du registre $R_R$ aura débité, à la fin du train d'impulsions $H_F$ et pendant le temps imparti, toutes les informations numériques N que l'on désirait transmettre, avant un nouveau chargement de tous les registres. D'autre part les mots transmis dans une même séquence numérique correspondent à des échantillons sonores non adjacents. Enfin, on voit facilement, d'après la description du fonctionnement du multiplexeur 19, qu'un même échantillon est transmis deux fois: à des places différentes dans deux séquences numériques elles mêmes séparées dans le temps par une troisième séquence numérique. Les différentes horloges synchronisant les registres proviennent d'un ensemble générateur 40 déclenché par le signal de synchronisation de ligne $H_L$ provenant d'un détecteur 20 recevant le signal de télévision T, et y détectant les impulsions de ligne $H_L$ et le signal de synchronisation de trame $H_T$. Le mélangeur 5 est un portier qui reçoit le signal T est les séquences numériques N et dont la sortie C débite alternativement le signal T, sauf les impulsions de synchronisation, et les séquences N pendant la durée de ces impulsions. Le portier peut être synchronisé par le signal de synchronisation de ligne $H_L$.

Pour une meilleure compréhension du fonctionnement de l'organe de codage représenté sur la figure 3, on a représenté sur la figure 4 les chronogrammes des différents signaux d'horloge: en (a) le signal $H_L$ formé des impulsions de synchronisation 100; en (b) le signal $H_2$ qui est un signal de fréquence 2f: pour chaque impulsion du signal $H_2$ est émis un échantillon sonore; en (c) le signal carré H de fréquence f; en (d) le signal $H_C$ qui déclenche alternativement le chargement des registres $T_8$ et $T_7$, avec un retard sur l'horloge $H_2$; en (e) le signal $H_D$ qui commande les décalages des registres $T_1$ à $T_8$ et dont la fin du train de 16 impulsions intervient avec une avance sur les impulsions $H_C$; en (f) le signal carré $H_3$ de fréquence

$$\frac{f}{2};$$

en (g) le signal $H_E$ commandant les registres $R_A$, $R_B$, $R_C$, $R_D$, $R_R$, $R_N$ avec sur l'horloge $H_C$ un retard suffisant pour ne pas avoir d'impulsion avant la fin des impulsions 200; en (h) le signal $H_F$ commandant les mêmes registres et dont les impulsions occupent le temps imparti aux séquences N: 40 impulsions pendant les impulsions 100, les impulsions suivantes étant inutiles pour la fin de ligne et ne servant qu'en fin de trame où elles occupent en partie ou en totalité le restant de la durée des impulsions 400.

La figure 5 représente un schéma d'un organe de décodage adapté au mode de réalisation du codeur décrit ci-dessus. L'organe de décodage reçoit un signal CS identique au signal C émis par le codeur, éventuellement entaché d'erreurs intervenues durant la transmission. Dans le cas où le signal C a été modulé en fréquence, le signal CS provient d'un démodulateur. Chaque séquence numérique faisant partie du signal CS commence par un mot de reconnaissance qui est détecté par un détecteur 21, ce qui déclenche différentes horloges. Une horloge $H_R$ commande la mémorisation des bits correspondant à, des échantillons sonores. Elle se compose de trains de 32 impulsions récurrent à la fréquence f, la fréquence des impulsions étant elle-même égale au débit de la séquence numérique incidente, le début du train d'impulsions coïncidant avec le premier bit sonore. L'horloge $H_R$ synchronise les décalages d'un registre à décalage R de 4×32 bits chargé en série. Le registre mémorise donc quatre séquences numériques et en numérotant les échantillons sonores successifs: $E_1$, $E_2$ ... $E_i$, ... , se décale de l'équivalent d'une séquence par ligne. A la fin d'un train d'impulsions, on dispose dans le registre R de l'entrée vers la sortie, des configurations binaires censées représenter les échantillons sonores suivants, i étant un entier quelconque:

$$E_{i+13}, E_{i+9}, E_{i+7}, E_{i+11}, E_{i+10}, E_{i+6}, E_{i+8}, E_{i+4}, E_{i+9}, E_{i+5}, E_{i+7}, E_{i+3}, E_{i+6}, E_{i+2}, E_{i+4}, E_i.$$

On dispose donc de deux représentations pour chacun des échantillons $E_{1+6}$ et $E_{i+7}$, ces deux représentations ayant été transmises avec 128 $\mu$s d'écart. Les sorties du registre R correspondant aux deux mots représentatifs de l'échantillon $E_6$ sont reliées à un comparateur 26. De même, les sorties correspondant aux deux mots représentatifs de l'échantillon $E_7$ sont reliées à un comparateur 27. L'une des deux représentations de chaque échantillon est d'autre part envoyée vers un portier 22 dont la sortie délivre successivement ces deux échantillons et charge une mémoire 23 dont le chargement peût être inhibé par un signal J. Le contenu de la mémoire 23 se décharge deux fois par ligne dans un convertisseur numérique-analogique 30 qui fournit le signal SON. Le signal J provient par example d'une porte ET 24 dont les entrées reçoivent d'une part un signal binaire résultant alternativement de la comparaison effectuée par le comparateur 26 et de ce celle effectuée par le comparateur 27, la sélection se faisant par un portier 25 fonctionnant au même rythme que le portier 22; sous le contrôle d'un signal carré h de fréquence f issu d'un générateur 29 déclenché par le détecteur 21. Pendant l'une des alternances du signal h, le portier 25 sélectionne la sortie du comparateur 26 et le portier 22 sélectionne l'une des représentations de l'échantillon $E_6$. Si les deux représentations sont identiques, le comparateur 26 délivre un niveau binaire 1 et, lorsque les autres anetrées de la porte 24 sont également au niveau 1, le signal J est au niveau 1 et le registre 23 peut se charger avec l'échantillon $E_6$. Par contre, si les deux représentations ne sont pas identiques, le comparateur 26 délivre un niveau binaire 0; le signal J est au niveau 0 et le chargement de la mémoire 23 est inhibé, si bien qu'il conserve l'échantillon précédent, qui est l'échantillon $E_5$ (à moins que le chargement de $E_5$ ait été inhibé précédemment). Pendant l'alternance suivante du signal h, le portier 25 sélectionne la sortie du comparateur 27 et le portier 22 sélectionne l'échantillon $E_7$. Selon les cas, la mémoire 23 se charge avec l'échantillon $E_7$ ou conserve l'échantillon $E_6$. La porte 24 reçoit deux autres signaux binaires: l'un provenant d'un circuit monostable 28 déclenché par la détection du mot de reconnaissance par le détecteur 21. Lorsque ce mot est transmis avec des erreurs, le circuit monostable ne se déclenche pas et sa sortie reste à 0, si bien que le chargement de la mémoire est inhibé. Le chargement du registre R ne s'effectue pas non plus, ce qui conduit à la perte de quatre représentations, mais ces échantillons n'étant pas adjacents, les conséquences sont moins importantes. L'autre signal binaire présent à l'entrée de la porte 24 est un signal d'horloge $H_2$ de fréquence 2f, fourni par le générateur 29, dont les deux impulsions par ligne ont lieu après le chargement d'une séquence complète dans le registre R. Pour obtenir le signal de télévision complet à partir du signal CS, il faut reconstituer les impulsions de synchonisation de ligne et de trame, ce qui est effectué par un générateur 31 déclenché par le détecteur 21. Une ligne à retard 32 compense le retard introduit par la durée de détection du mot de reconnaissance. Le signal CS retardé et les impulsions de synchronisation sont appliqués à un mélangeur 33 qui délivre le signal de télévision T.

Au lieu de comparer bit à bit complètement les deux représentations de chaque échantillon, il est préférable de comparer seulement les bits de poids le plus élevé, par exemple 4 bits au lieu de 8. Ainsi, en cas de non-identité, si l'erreur portait sur un bit de poids faible, cette erreur ne sera pas détectée par le comparateur 26 ou le comparateur 27 et l'échantillon $E_6$ ou $E_7$ sera chargé dans la mémoire puis transmis dans le convertisseur 30, ce qui introduira une faible erreur sur la valeur analogique obtenue et est préférable à la conservation de l'échantillon précédent dont la valeur analogique peut être très différente. Par contre, en cas d'erreur sur les bits de poids le plus élevé, le décodeur ne tiendra pas compte de l'échantillon concerné et maintiendra le précédent.

Etant donné qu'il est préférable de comparer entre eux les bits de poids le plus élevé plutôt que de maintenir l'échantillon précédent en cas de non-identité des bits de poids faibles, il apparait inutile de transmettre les deux représentations complètes de chaque échantillon. Il suffit de transmettre une représentation complète et par exemple, les quatre bits de poids le plus élevé d'une autre représentation. Il reste donc deux fois 4 bits disponibles dans chaque séquence, si les valeur de débit binaire, de bande passante à transmettre et de nombre de bits par échantillon restent inchangés. Il est donc possible de transmettre une troisième représentation des 4 bits de poids le plus élevé pour chaque échantillon. La décorrélation de toutes les représentations étant toujours souhaitable, on peut chercher à transmettre 32 bits comprenant une représentation complète de deux échantillons et une représentation partielle de 6 échantillons, les 8 échantillons étant différents, de façon que chaque échantillon ait trois représentations dans trois séquences distinctes, l'une complète, les deux autres partielles. Un mode de réalisation d'un codeur remplissant ces conditions est représenté sur la figure 6. Certains éléments sont communs avec ceux de la figure 3 et portent les mêmes références. Il s'agit des différentes sources de signaux binaires: 13, 14, 15, 16, des registres recevant les signaux binaires non sonores $R_N$ et $R_R$, du détecteur 20 et du mélangeur 5. Certains signaux de synchronisation sont identiques: $H_L$, $H_T$, $H_1$, $H_2$, $H_F$. Les mots $N_N$ correspondant à des échantillons sonores et émis deux fois par ligne par le convertisseur analogique-numérique 13 chargent alternativement deux registres à décalage de 8 bits I et II respectivement commandés par des horloges de chargement $H_I$ et $H_{II}$ de fréquence f. En même temps que le chargement du registre I, les 4 bits de poids le plus élevé de chacun des registres I et II chargent un registre à décalage de 8 bits V sous la commande de l'horloge $H_I$. Après le chargement du registre II et avant celui du registre I, le registre V se décale sous la commande d'un signal $H_V$ formé d'un train de 8 impulsions une fois par ligne et son contenu est transféré dans un registre VI. En même temps que le chargement du registre II, donc sous la commande de l'horloge $H_{II}$, 4 bits de chacun des registres V et VI chargent un registre de 8 bits III, les 4 autres bits de chacun des registres V et VI chargent un registre IV; les registres I, II, III, IV sont reliés en série dans cet ordre et sont équivalents aux registres $R_A$ à $R_D$ de la figure 4. Ils sont de la même facon reliés aux registres $R_N$ et $R_R$ et l'ensemble subit au moins 40 décalages sous l'action de l'horloge $H_F$, pendant les

impulsions de ligne, juste avant le chargement du registre II. Les différents signaux d'horloge sont issus d'un générateur d'horloge 41 du même genre que le générateur 40 de la figure 4, leurs chronogrammes sont représentés sur la figure 7: en (a) le signal de synchronisation de ligne $H_L$, en (b) le signal $H_2$ de fréquence 2f; en (c) le signal $H_{II}$ de fréquence f de chargement des registres II, III, IV, $R_N$, $R_R$; en (d) le signal de chargement $H_I$, en (e) le signal de décalage $H_V$, en (f) le signal de décalage $H_F$. On peut déduire de ces chronogrammes que les mots apparaissant successivement à la sortie du registre N sont d'abord le mot de reconnaissance, comme précédemment, puis les représentations des échantillons $e_i$, $e_{i+2}$, $e_{i+1}$, $e_{i+4}$, $E_{i+3}$, $E_{i+5}$, i étant un entier s'incrémentant à chaque ligne. La lettre minuscule e est utilisée pour les représentations incomplètes, c'est-à-dire ne comportant que les 4 bits de poids le plus élevé.

Le décodeur adapté à ce type de codeur est peu différent de celui de la figure 5. Un registre mémorise trois séquences successives. On retrouve dans ces trois séquences deux représentations partielles $\beta$ et une représentation complète $\gamma$ de deux échantillons. Deux circuits logiques identiques comprenant chacun trois comparateurs et des portes logiques effectuant pour chaque échantillon les comparaisons suivantes: les 4 bits de poids forts de $\gamma$ formant un mot $\delta$ sont comparés à $\alpha$ et à $\beta$ et $\alpha$ et $\beta$ sont comparés entre eux.

En fonction des résultats des comparaisons, le circuit logique soit valide la représentation $\gamma$ complète, soit valide la représentation partielle $\alpha$ et commande le maintien des bits de poids faible de l'echantillon précédent. Le procédé de décodage, plus souple que le précédent, conduit à un taux d'erreurs plus faible que les bits de poids le plus élevé. Toutefois, pour obtenir ce résultat il est préférable de perfectionner encore le codeur décrit ci-dessus sous sa forme la plus simple pour la clarté de l'explication, en décorrélant les différentes représentations d'un même échantillon d'une durée plus grande (au moins $2\theta_L$ au lieu de $\theta_L$ comme décrit). On peut envisager de nombreuses possibilités de décorrélation en multipliant le nombre de registres à décalage compris dans le codeur et le nombre total de bits mémorisés simultanément dans le décodeur, et en s'inspirant du mode de décorrélation utilisée dans le codeur de la figure 4.

L'invention n'est pas limitée aux modes de réalisation décrits mais peut être réalisée par tout dispositif permettant la mise en oeuvre du procédé de transmission décrit.

**Revendications**

1. Procédé de transmission d'un signal analogique audiofréquence pendant les intervalles (100) de synchonisation de ligne d'un signal de télévision, le procédé de transmission comportant une phase de codage et une phase de décodage; la phase de codage comprenant une étape de prise d'échantillons du signal analogique audiofrequence (SON) et de conversion analogique-numérique (13) de ces échantillons en mots successifs de n bits se succédant à une fréquence double de la fréquence (f) ligne, n étant un nombre entier, et une étape de formation d'un signal de télévision composite (C, CS); la phase de décodage comprenant une étape d'extraction du signal de télévision (T), une étape (31) de reconstitution d'impulsions de synchronisation et une étape (30) de conversion numérique-analogique des mots numériques; procédé caractérisé en ce que la phase de codage comprend en outre les étapes suivantes:

— mémorisation de quatre suites de n bits appartenant à au moins quatre mots de n bits;
— émission, pendant chaque impulsion de synchronisation de ligne (100), d'une séquence de quatre suites de n bits (A, B, C, D) appartenant à au moins quatre mots issus de ladite conversion analogique-numérique (13) d'échantillons différents; tous les bits d'un mot issu de la conversion analogique-numérique (13) étant émis à un emplacement déterminé d'une première séquence et émis au moins une deuxième fois, en tout ou partie, à un emplacement différent d'une deuxième séquence;
— émission, au début de chaque impulsion de synchronisation (100) avant la séquence de quatre suites de n bits, d'une séquence de reconnaissance constituée d'un mot ($N_R$) prédéterminé de p bits;
— et multiplexage (5) des séquences de quatre suites de n bits avec le signal de télévision (T) sans impulsions de synchronisation pour former ledit signal de télévision composite (C, CS);

et en ce que la phase de décodage comprend en outre les étapes suivantes:

— détection (21) de ladite séquence de reconnaissance conditionnant ladite étape d'extraction;
— mémorisation (R) des séquences suivant les séquences de reconnaissance, par ordre d'arrivée, la capacité de mémorisation étant égale à quatre séquences;
— comparaisons (26, 27) deux à deux de tout ou partie des différents bits émis dans au moins deux séquences et appartenant à des mots issus de la conversion analogique-numérique de mêmes échantillons, lesdites comparaisons s'effectuant sur une paire de mots issus de la conversion analogique-numérique de deux échantillons successifs;
— choix d'un des deux mots de ladite paire en cas de résultats de comparaisons positifs ou du mot choisi lors de la comparaison précédente en cas de résultats de comparaisons

négatifs et mémorisation (23) des nouveaux mots choisis; lesdits mots choisi étant convertis en signaux analogiques (SON) lors de ladite étape (30) de conversion numérique-analogique;

— reconstitution (31) des impulsions de synchonisation et mélange (33) avec ledit signal de télévision extrait (T).

2. Procédé selon la revendication 1, caractérisé en ce que les quatre suites de n bits émises sont quatre mots complets (A, B, C, D) issus de la conversion analogique de quatre échantillons différents, tous les bits de chacun desdits quatre mots étant émis dans des première et seconde séquence non-consécutives; et en ce que lesdites comparaisons portent sur tous les bits émis dans lesdites première et seconde séquences.

3. Procédé selon la revendication 1, caractérisé en ce que, n'étant un nombre pair, les quatre suites de n bits émises à chaque ligne lors de la phase de codage sont constituées par quatre fois

$$\frac{n}{2}$$

bits de poids le plus élevé appartenant à quatre mots issus de la conversion analogique-numérique (13) d'échantillons différents et deux fois n bits représentant deux mots complets issus de la conversion de deux autres échantillons différents, et en ce que les comparaisons effectuées lors de la phase de décodage portent sur deux ensembles de trois suites de

$$\frac{n}{2}$$

bits; les bits de chaque ensemble étant les bits émis dans trois séquences distinctes et appartenant à des mots issus de la conversion analogique-numérique (13) d'un même échantillon; les premières et deuxième suites comportant

$$\frac{n}{2}$$

bits les plus significatifs et la troisième suite un mot de n bits et en ce que les comparaisons (25, 27) pendant la phase de décodage portent, deux à deux, sur tous les bits des première et deuxième suites et les

$$\frac{n}{2}$$

bits de poids le plus fort de la troisième suite; ladite conversion numérique-analogique (30) s'effectuant sur les n bits de la troisième suite en cas de resultats de comparaisons positifs ou sur les n bits de la troisième suite précédemment choisie dans le cas contraire.

4. Procédé selon l'une des revendications 1 à 3, caractérisé en ce que des signaux numeriques supplémentaires étant transmis pendant les intervalles de synchronisation de trame, il comprend une étape pendant laquelle des mots ($N_e$) représentant ces signaux numériques sont mémorisés et émis à la suite desdites quatre suites de n bits pendant les impulsions de synchronisation de ligne comprises dans les intervalles de synchronisation de trame.

5. Procédé selon la revendication 4, caractérisé en ce que la configuration binaire constituant ledit mot de reconnaissance ($N_R$) est différente selon qu'il est émis au début d'une impulsion de synchronisation de ligne comprise ou non dans un intervalle de synchronisation de trame, le détection de ce mot lors du décodage permettant de déterminer le type d'impulsion de synchonisation à reconstituer et de déclencher la réception des séquences de signaux numériques.

6. Dispositif de codage pour la mise en oeuvre de la phase de codage du procédé de transmission selon la revendication 2, caractérise en ce qu'il comprend:

— un convertisseur analogique-numérique (13) fonctionnant à une fréquence double de la fréquence-ligne, recevant le signal analogique (SON);

— un ensemble de huit registres à décalage de n bits ($T_8$, $T_7$, $T_6$ ... $T_1$) associés à des indices numériques 8 à 1 et reliés en série dans cet ordre;

— un portier (17) adressant les mots issus du convertisseur alternativement vers les registres ($T_8$ et $T_7$);

— quatre registres à décalage de n bits ($R_A$, $R_B$, $R_C$, $R_D$) associés à des indices alphabétiques A à D et reliés en série dans cet ordre et un registre à décalage de p bits ($R_R$) relié au registre ($R_D$) d'indice D;

— un multiplexeur (19) adressant une fois par ligne les registres ($R_A$, $R_B$, $R_C$, $R_D$) d'indices A à D avec respectivement le contenu des registres ($T_8$, $T_4$, $T_6$, $T_2$) d'indices 8, 4, 6 et 2, et, alternativement respectivement le contenu des registres ($T_7$, $T_3$, $T_5$, $T_1$) d'indices 7, 3, 5 et 1.

— un générateur de mot de reconnaissance (14) chargeant une fois par ligne le registre ($R_R$) avec un mot prédéterminé de p bits;

— des moyens générateurs d'horloge (40) synchonisés par les impulsions de synchronisation de ligne, délivrant des signaux de synchronisation du convertisseur (13), du portier (17), du multiplexeur (19) et des registres ($R_1$ à $R_8$, $R_A$ à $R_D$, $R_R$);

— un mélangeur (5) synchronisé par les impulsions de synchonisation de ligne (HL), recevant le signal de télévision (T) et les signaux

issus du registre à décalage de p bits ($R_R$) et produisant ledit signal de télévision composite (C).

7. Dispositif de codage pour la mise en oeuvre du procédé de transmission selon la revendication 3, caractérisé en ce qu'il comprend;

— un convertisseur analogique-numérique (13) fonctionnant à une fréquence double de la fréquence-ligne, recevant le signal analogique (SON);
— deux registres à décalage de n bits associés à des indices numériques I et II et reliés en série dans cet ordre, recevant alternativement un mot sur deux issus du convertisseur (13);
— deux registres à décalage de n bits associés à des indices numériques V et VI reliés en série dans cet ordre, le registre d'indice V recevant les

$$\frac{n}{2}$$

bits de poids le plus élevé contenus dans les registres d'indices respectifs I et II;
— deux registres à décalage de n bits associés à des indices numériques III et IV et reliés en série dans cet ordre, l'entrée du registre d'indice III étant reliée à la sortie du registre d'indice II, recevant le contenu des registres d'indices respectifs V et VI;
— un registre à décalage de p bits ($R_R$) relié au registre d'indice IV;
— un générateur de mots de reconnaissance (14) chargeant une fois par ligne le registre à décalage de p bits ($R_R$) avec un mot prédéterminé de p bits;
— un mélangeur (5) synchronisé par les impulsions de synchronisation de ligne, recevant le signal de télévision (T) et les signaux issus du registre à décalage de p bits ($R_R$) et produisant ledit signal de télévision composite (C).

8. Dispositif de codage selon la revendication 6, caractérisé en ce qu'il comprend en outre au moins une source (16) de signaux numériques supplémentaires et un registre à décalage supplémentaire ($R_N$) dont la sortie est reliée à l'entrée du registre ($R_A$) d'indice A, recevant lesdits signaux numériques supplémentaires.

9. Dispositif de codage selon la revendication 7, caractérisé en ce qu'il comprend en outre au moins une source (16) de signaux numériques supplémentaires et un registre à décalage supplémentaire ($R_N$) dont la sortie est reliée à l'entrée du registre d'indice I, recevant lesdits signaux numériques supplémentaires.

**Claims**

1. A process of transmitting an analog audiofrequency signal during the line synchronisation intervals (100) of a television signal, said process comprising an encoding step and a decoding step; said encoding step comprising a step of sampling said analog audiofrequency signal (SON) and of analog-numerical conversion (13) of the samples for converting the same into successive words of *n* bits which follow each other at a frequency equal to twice the line frequency (f), where *n* is an integer, said encoding step further comprising a step of forming a composite television signal (C, C5), said decoding step comprising a step of extracting the television signal (T), a step (31) of reconstituting synchronizing pulses and a step (30) of numerical-analog conversion of numerical words; said process being characterized in that said encoding step further comprises the following steps:

— memorizing four series of *n* bits belonging to at least four words of *n* bits;
— emitting durich each line synchronization pulse (100) a sequence of four series having *n* bits (A, B, C, D) belonging to at least four words issuing from said analog-numerical conversion (13) of different samples; all the bits of a word issued from the analog-numerical conversion (13) being emitted at given location of a first sequence and emitted at least a second time entirely or partially at a different location of a second sequence;
— emitting at the beginning of each synchronization pulse (100) preceding the sequence comprising four series of *n* bits an identification sequence constituted by one predetermined word ($N_R$) having *n* bits;
— and multiplexing (5) of the sequences of four series having *n* bits with the television signal (T) without synchronization pulses, so as to form said composite television signal (C, C5);
— memorizing (R) of the sequences following the identification sequences in the order of their arrival, the memorizing capacity being equal to four sequences;
— comparing (26, 27) two by two of all or part of the different bits emitted in at least two sequences and belonging to two words issued from the analog-numerical conversion of similar samples, said comparing steps being carried out on two words issuing from, the analog-numerical conversion of two successive samples;
— selecting one of said two words when the results of said comparing are positive, or selecting the word selected during the preceding comparing step when the results of said comparing are negative, and memorizing (23) the new selected words; said selected words being converted into

analog signals (SON) during said step (30) of numerical-analog conversion;
— reconstituting (31) the synchronization pulses and mixing (33) with said extracted television signal (T).

2. A process according to claim 1, characterized in that said emitted four series of *n* bits are four complete words (A, B, C, D) issuing from the analog conversion of four different samples, all the bits of each one of said four words being emitted in first and second nonconsecutive sequences; and in that said steps of comparing are effected on all the bits emitted in said first and second sequences.

3. A process according to claim 1, characterized in that, *n* being an even integer, said four series of *n* bits emitted at each line during said encoding step are constituted by four times

$$\frac{n}{2}$$

bits of the heaviest weight belonging to four words issuing from the analog-numerical conversion (13) of different samples, and by twice *n* bits representing two complete words issuing from the conversion of two other different samples, and in that the comparing steps carried out during the decoding step are effected on two groups of three series comprising

$$\frac{n}{2}$$

bits; the bits of each group being the bits emitted in three distinct sequences and belonging to words issuing from the analog-numerical conversion (13) of one identical sample, the first and second series comprising the significant

$$\frac{n}{2}$$

bits; and the third series comprising one words having *n* bits, and in that said comparing steps (25, 27) carried out during the decoding step are effected, two by two, on all the bits of the first and second series and the

$$\frac{n}{2}$$

bits of the greatest weight of the third series; said numerical-analog conversion (30) being carried out on the *n* bits of the third series when the results of the comparing step are positive, or on the *n* bits of the previously selected third series in the opposite case.

4. A process according to any one of claims 1 to 3, characterized in that, while said supplementary numerical signals are transmitted during the frame synchronization intervals, it comprises a step during which words ($N_e$) representing said numerical signals are memorized and emitted after said four series comprising *n* bits during the line synchronization pulses comprised in the frame synchronization intervals.

5. A process according to claim 4, characterized in that the binary configuration constituting said identification word ($N_R$) is different, depending on whether it is emitted at the beginning of a line synchronization pulse comprised or not comprised in a frame synchronization interval, the detection of said word during the decoding step enabling to determine the type of synchronization pulse to be reconstituted and to trigger the reception of the sequences of numerical signals.

6. An encoding device for carrying out the encoding step of the transmission process according to claim 2, characterized in that it comprises:

— an analog-numerical converter (13) operating at a frequency equal to twice the line frequency, and receiving said analog signal (SON);
— a group of eight shifting registers ($T_8$, $T_7$, $T_6$ ... $T_1$) having *n* bits, associated to numerical indices 8 to 1 and connected in series in this order;
— gating means (17) directing the words issuing from the converter alternatively to the registers ($T_8$ and $T_7$);
— four shifting registers ($R_A$, $R_B$, $R_C$, $R_D$) having *n* bits, associated to alphabetical indices A to D and connected in series in this order, and one shifting register ($R_R$) having *p* bits, connected to said register ($R_D$) having said index D;
— a multiplexing device (19) directing once per line respectively to said registers ($R_A$, $R_B$, $R_C$, $R_D$) having indices A to D the contents of the registers ($T_8$, $T_4$, $T_6$, $T_2$) having the indices 8, 4, 6 and 2 and alternatively the contents of the registers ($T_7$, $T_3$, $T_5$, $T_1$) having the indices 7, 3, 5 and 1, respectively;
— an identification word generator (14) loading once per line the register ($R_R$) with a predetermined word having *p* bits;
— clock generating means (40) synchronized by the line synchronization pulses, delivering synchronizing signals for the converter (13), the gating means (17), the multiplexing device (19) and the registers ($R_1$ to $R_8$, $R_A$ to $R_D$ and $R_R$);
— a mixer (5) synchronized by the line synchronization pulses (HL), receiving the television signal (T) and the signals issuing from said shifting register ($R_R$) having *p* bits, and producing said composite television signal (C).

7. An encoding device for carrying out the transmissing process according to claim 3, characterized in that it comprises:

— an analog-numerical converter (13) operating at a frequency equal to twice the line frequency, and receiving said analog signal (SON);
— two shifting registers having *n* bits, associated to numerical indices I and II and connected in series in this order, receiving alternatively every other word issued from said converter (13);
— two shifting registers having *n* bits, associated to numerical indices V and VI, connected in series in this order, the register having the index V receiving the

$$\frac{n}{2}$$

bits of the greatest weight contained in the registers having the indices I and II, respectively;
— two shifting registers having *n* bits, associated to numerical indices III and IV and connected in series in this order, the input of the register having index III being connected to the output of the register having index II, and receiving the contents of the registers having indices V and VI, respectively;
— a shifting register having *p* bits ($R_R$), connected to the register having the index IV;
— an identification word generator (14) loading once per line the shifting register having *p* bits ($R_R$) with a predetermined word having *p* bits;
— a mixer (5) synchronized by the line synchronization pulses, receiving the television signal (T) and the signals issuing from said shifting register having *p* bits ($R_R$), and generating said composite television signal (C).

8. An encoding device according to claim 6, characterized in that it further comprises at least one source (16) of supplementary numerical signals and one supplementary shifting register ($R_N$) the output of which is connected to the input of the register having the index A, receiving said supplementary numerical signals.

9. An encoding device according to claim 7, characterized in that it further comprises at least one source (16) of supplementary numerical signals and one supplementary shifting register ($R_N$) the output of which is connected to the input of the register having the index I, receiving said supplementary numerical signals.

**Patentansprüche**

1. Verfahren zur Uebertragung eines Audiofrequenz-Analosignals während der Synchronisationsintervalle (100) bei der Liniensynchronisierung eines Fernsehsignals, mit einer Kodierungs= und einer Dekodierungs-Verfahrensstufe, wobei die Kodierungsstufe eine Musterungs= und Umformungsstufe zum Mustern des Audiofrequenz-Analogsignals (SON) und zur analog-numerischen Umwandlung (13) dieser Muster in *n* Bits aufweise, aufeinanderfolgende Ausdrücke umfasst, die nacheinander mit einer Frequenz erscheinen, die zweimal so gross ist, wie die Linienfrequenz (f), wo *n* eine ganze Zahl darstellt, sowie eine Signalerzeugungsstufe zur Erzeugung eines zusammengesetzten Fernsehsignals (C, C5), während die Dekodierungsstufe eine Ausspeicherstufe zum Ausspeichern des Fernsehsignals (T), eine Wiederherstellungsstufe (31) zur Wiederherstellungs von Synchronisierungsimpulsen, sowie eine Umwandlungsstufe (30) zur numerisch-analogen Umwandlung der numerischen Ausdrücke umfasst, dadurch gekennzeichnet, dass die Kodierungsstufe ferner folgende Verfahrensstufen umfasst:

— Speichern von vier *n* Bits aufweisenden Reihen mit je wenigstens vier *n* Bits aufweisenden Ausdrücken;
— Abgeben, während jedes Liniensynchronisierungsimpulses (100), einer Sequenz von vier *n* Bits aufweisenden Reihen (A, B, C, D), die zu wenigstens vier von der analog-numerischen Umwandlung (13) verschiedener Muster herrührenden Ausdrücken gehören, wobei alle Bits eines von der analog-numerischen Umwandlung (13) herrührenden Ausdrucks an einer bestimmten Stelle einer ersten Sequenz abgegeben werden und wenigstens ein zweites Mal vollständig oder teilweise an einer anderen Stelle einer zweiten Frequenz abgegeben werden;
— Abgeben, zu Beginn jedes Synchronisierungsimpulses (100) vor der Sequenz von vier *n* Bits aufweisenden Reihen, einer Erkennungssequenz, die aus einem vorbestimmten, *p* Bits aufweisen Ausdruck ($N_R$) besteht;
— und Multiplexieren (5) der Sequenzen von je *n* Bits aufweisenden Reihen mit dem Fernsehsignal (T) ohne Synchronisierungsimpulse, zwecks Erzeugung des zusammengesetzten Fernsehsignals (C, CS);

und dass die Dekodierungsstufe ferner folgende Verfahrensstufen umfasst:

— Demodulation (21) der die Ausspeicherungsstufe steuernden Erkennungssequenz;
— Speichern (R) der auf die Erkennungssequenzen folgenden Sequenzen in der Reihenfolge ihres Erscheinens, wobei die Speicherkapazität vier Sequenzen entspricht;
— paarweises Vergleichen (26, 27) aller Bits oder eines Teiles der Bits, die in wenigstens

zwei Sequenzen abgegeben werden und zu von der analog-numerischen Umwandlung gleicher Muster herrührenden Ausdrücken gehören, wobei dieses Vergleichen anhand zweier von der analog-numerischen Umwandlung zweier aufeinander folgender Muster herrührender Ausdrücke erfolgt;

— Wahl eines dieser beiden Ausdrücke, wenn das Vergleichsresultat positiv ist, oder das beim vorhergehenden Vergleich gewählten Ausdrucks, wenn das Vergleichsresultat negativ ist, sowie Spechiern (23) der neuen gewählten Ausdrücke, wobei diese gewählten Ausdrücke während der numerisch-analogen Umwandlungsstufe (30) in Analogsignale (SON) umgewandelt werden;

— Wiederherstellung (31) der Synchronisierungsimpulse und Mischen (33) mit dem ausgespeicherten Fernsehsignal (T).

2. Verfahren nach Anspruch 1, dadurch gekennzeichnet, dass die vier *n* Bits aufweisenden Reihen aus vier vollständigen Ausdrücken (A, B, C, D) bestehen, die von der Analog-Umwandlung vier verschiedener Muster herrühren, wobei alle Bits eines jeden dieser Ausdrücke in nicht aufeinander folgenden ersten und zweiten Sequenzen abgegeben werden, un dass die Vergleiche alle Bits betreffen, die in dieser ersten und zweiten Sequenz abgegeben werden.

3. Verfahren nach Anspruch 1, dadurch gekennzeichnet, dass, während *n* eine gerade ganze Zahl ist, die vier während der Kodierungsstufe bei jeder Linie abgegeben Reihen von *n* Bits aus vier mal

$$\frac{n}{2}$$

maximalen Wertes bestehen, die zu vier von der analog-numerischen Umwandlung (13) verschiedener Muster herrührenden Ausdrücken gehören, sowie aus zwei mal *n* Bits, die zwei von der Umwandlung zweier anderer, verschiedener Muster herrührende vollständige Ausdrücke darstellen, und dass das während der ersten Dekodierungsstufe erfolgende Vergleichen anhand zweier Gruppen von drei je

$$\frac{n}{2}$$

Bits umfassenden Reihen durchgeführt wird, wobei die Bits jeder Gruppe die in drei verschiedenen Sequenzen abgegebenen Bits sind und zu von der analog-numerischen Umwandlung (13) eines und desselben Musters Herrührenden Ausdrücken gehören, und wobei die erste und die zweite Reihe die bedeutsamsten

$$\frac{n}{2}$$

Bits aufweisen und die dritte Reihe einen *n* Bits umfassenden Ausdruck umfasst, ferner dadurch, dass das während der Dekodierungsstufe erfolgende Vergleichen (25, 27) paarweise anhand aller Bits der ersten und zweiten Reihe, sowie anhand der den höchsten Wert besitzenden

$$\frac{n}{2}$$

der dritten Reihe durchgeführt wird, wobei die numerisch-analoge Umwandlung (30) anhand der *n* Bits der dritten Reihe erfolgt, wenn die Vergleichsresultate positiv sind, oder, im gegenteiligen Fall, anhand der *n* Bits der zuvor gewählten dritten Reihe.

4. Verfahren nach einem der Ansprüche 1 bis 3, dadurch gekennzeichnet, dass während zusätzliche numerische Signale während der Rastersynchronisierungsintervalle abgegeben werden, das Verfahren Stufe umfasst, während welcher diese numerischen Signale darstellende Ausdrücke ($N_C$) nach den genannten vier Reihen mit *n* Bits während der in den Rastersynchronisierungsintervallen liegenden Liniensynchronisationsimpulse gespeichert und abgegeben werden.

5. Verfahren nach Anspruch 4, dadurch gekennzeichnet, dass die den Erkennungsausdruck ($N_R$) bildende binäre Form unterschiedlich ist, je nachdem ob sie bei Beginn eines Liniensynchronisationsimpulses abgegeben wird, der innerhalb eines Rastersynchronisationsintervalles liegt oder nicht, wobei die Demodulation dieses Ausdrucks während des Dekodierens es gestattet, den Typ des wiederherzustellenden Synchronisationsimpulses zu bestimmten und den Empfang der Sequenzen numerischer Signale auszulösen.

6. Kodiervorrichtung zur Durchführung der Kodierungs-Verfahrensstufe des Uebertragungsverfahrens nach Anspruch 2, dadurch gekennzeichnet, dass sie umfasst:

— einen analog-numerischen Umwandler (13), dessen Betriebsfrequenz das Doppelte der Linienfrequenz beträgt und der das Analogsignal empfängt (SON);

— eine Gruppe von acht Verschiebungsregistern mit *n* Bits ($T_8$, $T_7$, $T_6$ ... $T_1$), die numerischen Indizes 8 bis 1 zugeordnet und in dieser Reihenfolge in Serie geschaltet sind;

— einen Torstromkreis (17), der die vom Umwandler gelieferten Ausdrücke abwechselnd den Registern ($T_8$ und $T_7$) zuleitet;

— vier Verschiebungsregister mit *n* Bits ($R_A$, $R_B$, $R_C$, $R_D$), die alphabetischen Indizes A bis D zugeordnet und in dieser Reihenfolge in Serie geschaltet sind, sowie ein Verschiebungsregister mit *p* Bits ($R_R$), das mit dem dem Index D zugeordneten Register ($R_D$) verbunden ist;

— ein Multiplexgerät (19), das einmal pro Linie die Register ($R_A$, $R_B$, $R_C$, $R_D$) mit den Indizes A bis D anspricht und an sie abwechseselnd den jeweiligen Inhalt der den Indizes 8, 4, 6 und 2 zugeordneten Register ($T_8$, $T_4$, $T_6$, $T_2$) bzw. den Inhalt der den Indizes 7, 3, 5 und 1 zugeordneten Register ($T_7$, $T_3$, $T_5$, $T_1$) überträgt;

— einen Erkennungsausdruckserzeuger (14), der einmal pro linie an das Register ($R_R$) einen $p$ Bits umfassenden Ausdruck abgibt;

— vermittels der Liniensynchronisationsimpulse synchronisierte Zeitgebermittel (40), die Synchronisierungssignale für den Umwandler (13), den Torstromkreis (17), das Multiplexgerät (19) und die Register ($R_1$ bis $R_8$, $R_A$ bis $R_D$, $R_R$) liefern;

— einen durch die Liniensynchronisationsimpulse (HL) synchronisierten Mischer, der Fernsehsignal (T) und die von Verschiebungsregister ($R_R$) mit $p$ Bits abgegebenen Signale empfängt und das zusammengesetzte Fernsehsignal (C) erzeugt.

7. Kodiervorrichtung zur Durchführung des Uebertragungsverfahrens nach Anspruch 3, dadurch gekennzeichnet, dass sie umfasst:

— einen analog-numerischen Umwandler (13), dessen Betriebsfrequenz doppelt so gross ist, wie die Linienfrequenz, und der das Analogsignal (SON) empfängt;

— zwei $n$ Bits aufweisende Verschiebungsregister, die den numerischen Indizes I und II zugeordnet und in dieser Reihenfolge in Serienschaltung miteinander verbunden sind, wobei diese Register abwechselnd je einen von zwei vom Umwandler (13) abgegebenen Ausdruck empfangen;

— zwei $n$ Bits aufweisende Verschiebungsregister, die den numerischen Indizes III und IV zugeordnet und in Serienschaltung in dieser Reihenfolge miteinander verbunden sind, wobei das dem Index III zugeordnete Register an den Ausgang des dem Index II zugeordneten Registers angeschlossen ist und dieses Register den Inhalt der den Indizes V bzw. IV zugeordneten Register empfängt;

— ein $p$ Bits umfassendes Verschiebungsregister ($R_R$), das mit dem dem Index IV zugeordneten Register verbunden ist;

— ein Erkennungsausdruckerzeuger (14), der einem pro Linie das $p$ Bits umfassende Register ($R_R$) mit einem vorbestimmten, $p$ Bits aufweisenden Ausdruck beschickt;

— einen durch die Liniensynchronisationsimpulse synchronisierten Mischer (5), der das Fernsehsignal (T), sowie die von dem $p$ Bits aufweisenden Register ($R_R$) erzeugten Signale empfängt und das zusammengesetzte Fernsehsignal (C) erzeugt.

8. Kodiervorrichtung nach Anspruch 6, dadurch gekennzeichnet, dass sie ferner wenigstens eine Quelle (16) zusätzlicher numerischer Signale und ein zusätzliches Verschiebungsregister ($R_N$) aufweist, dessen Ausgang mit dem Eingang des dem Index A zugeordneten Registers ($R_A$) verbunden ist, wobei dieses Register die zusätzlichen numerischen Signale empfängt.

9. Kodiervorrichtung nach Anspruch 7, dadurch gekennzeichnet, dass sie ferner wenigstens eine Quelle (16) zusätzlicher numerischer Signale, sowie ein zusätzliches Verschiebungsregister ($R_N$) aufweist, dessen Ausgang mit dem Eingang des dem index I zugeordneten Registers verbunden ist, wobei dieses Register die zusätzlichen numerischen Signale empfängt.

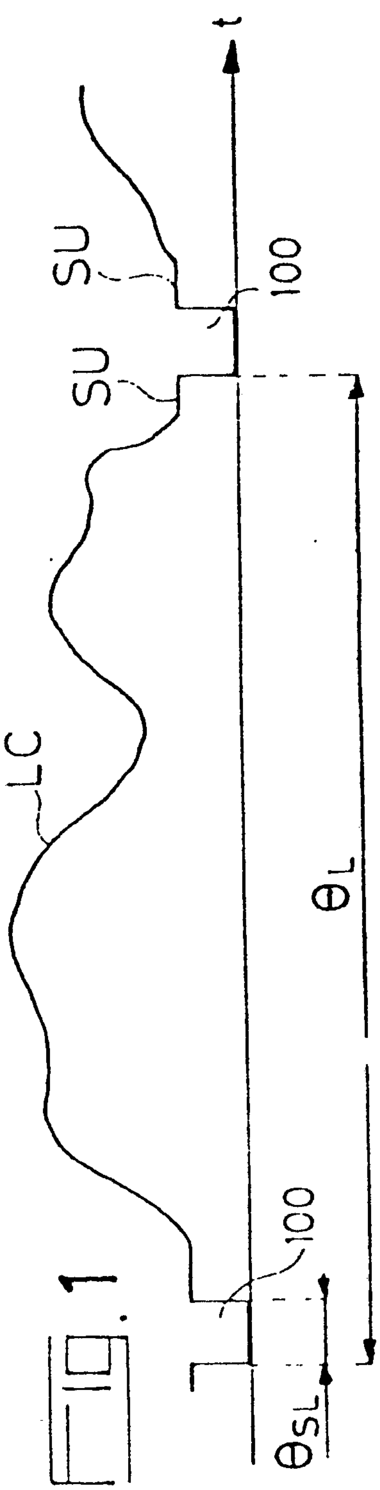
t
SU
SU
100
LC
θL
100
θSL

Fig. 1

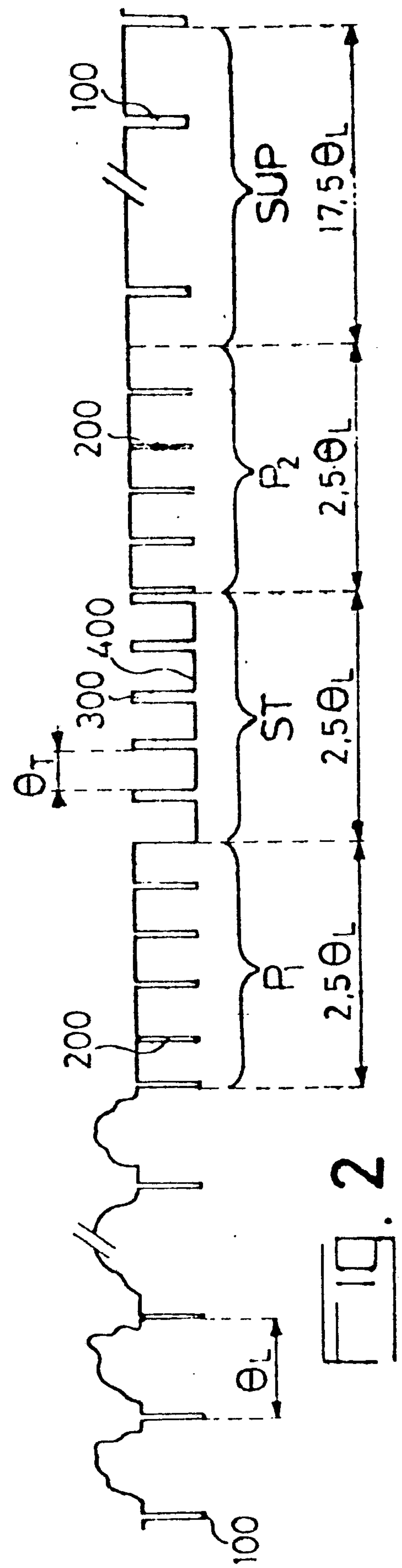
100
SUP
17,5θL
200
P2
2,5θL
300
400
θT
ST
2,5θL
200
P1
2,5θL
θL
100

Fig. 2

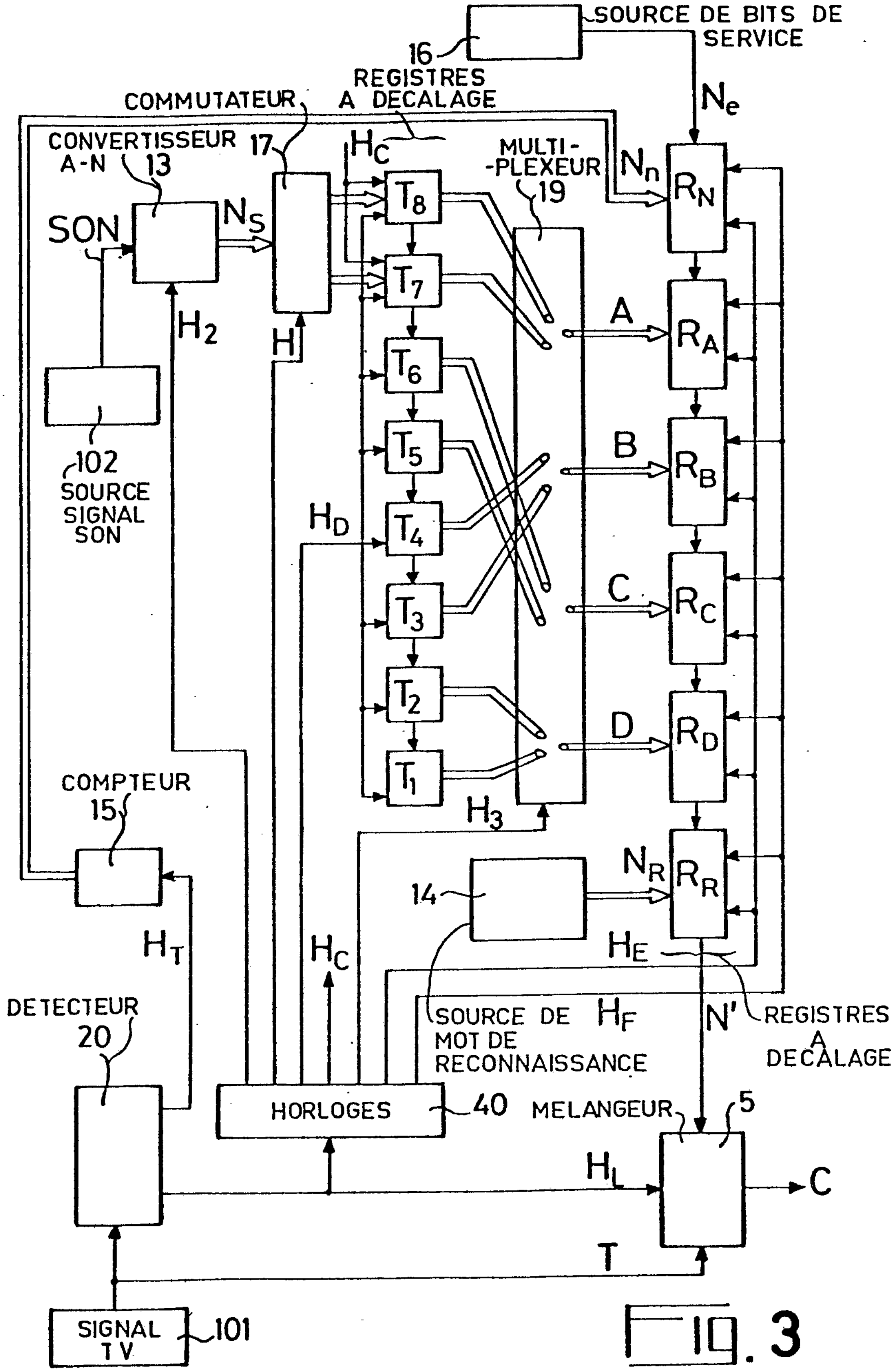
SOURCE DE BITS DE SERVICE
16
REGISTRES A DECALAGE
COMMUTATEUR
CONVERTISSEUR A-N
13
17
$H_C$
MULTI-PLEXEUR
19
$N_e$
$N_n$
$R_N$
SON
$N_S$
$T_8$
$T_7$
$T_6$
$T_5$
$T_4$
$T_3$
$T_2$
$T_1$
A
B
C
D
$R_A$
$R_B$
$R_C$
$R_D$
$R_R$
$H_2$
H
102
SOURCE SIGNAL SON
$H_D$
COMPTEUR
15
$H_3$
14
$N_R$
$H_T$
$H_C$
$H_E$
DETECTEUR
20
SOURCE DE MOT DE RECONNAISSANCE
$H_F$
N'
REGISTRES A DECALAGE
HORLOGES
40
MELANGEUR
5
$H_L$
C
T
SIGNAL TV
101

Fig. 3

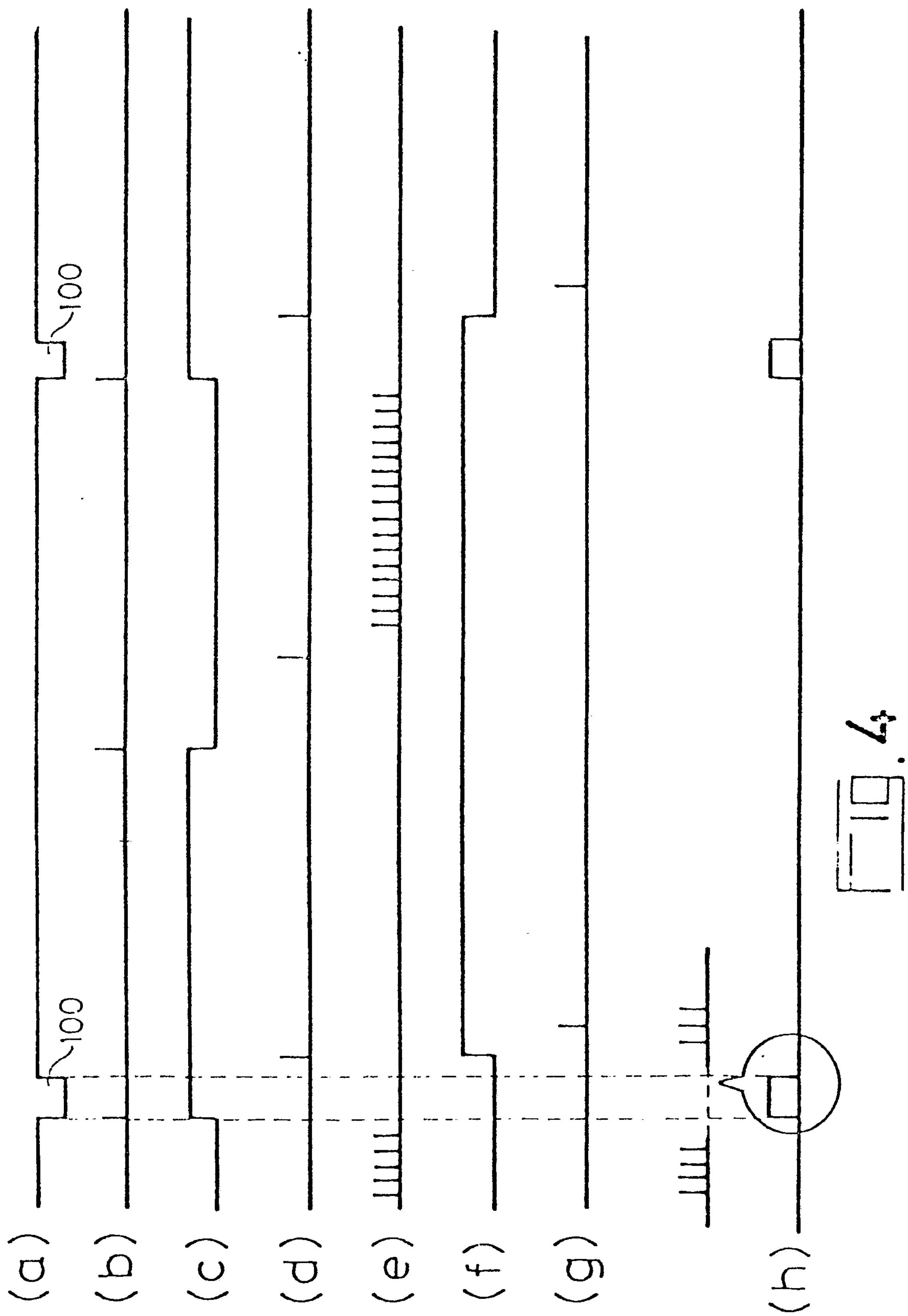


Fig. 4.

Fig. 5

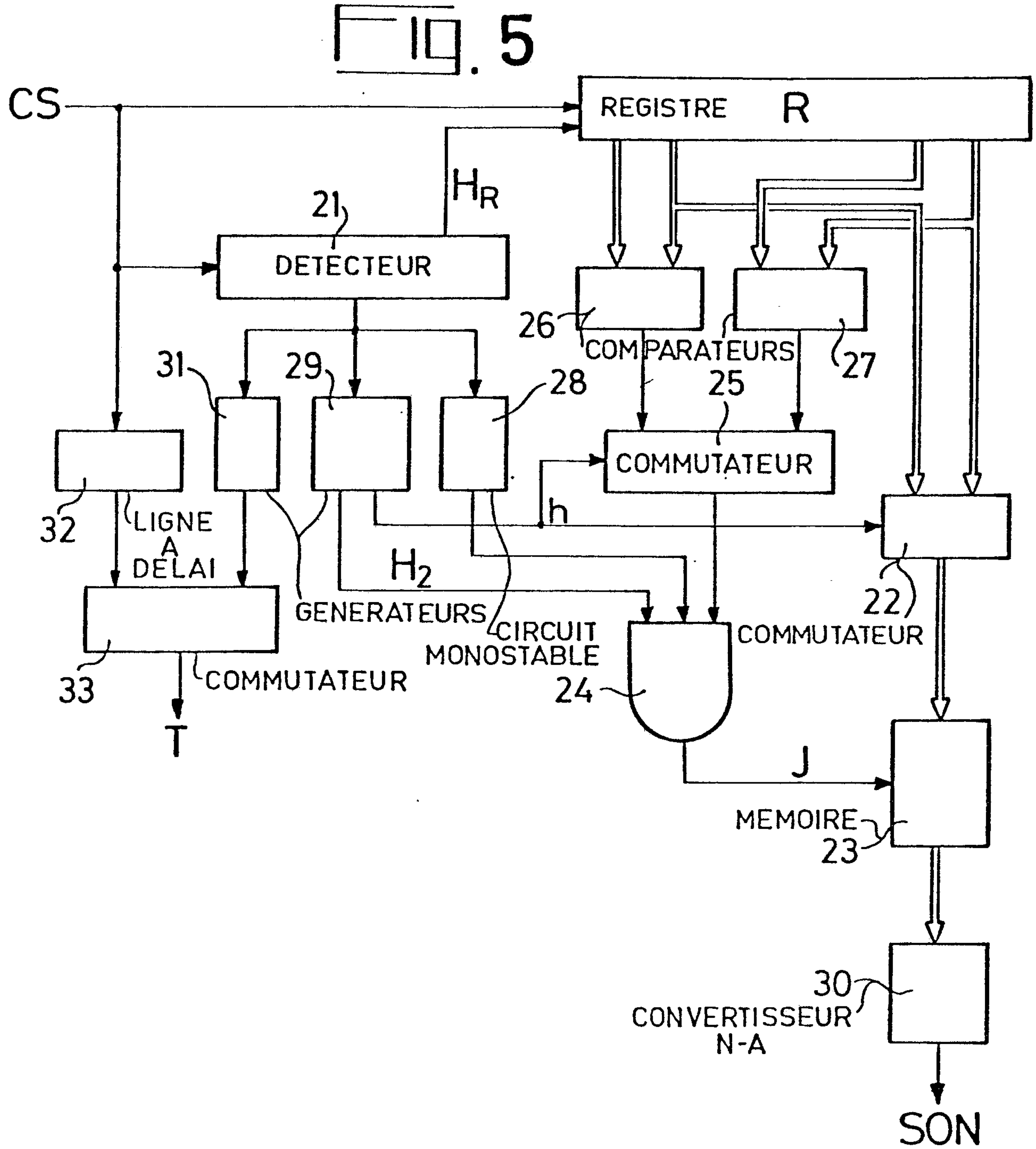
CS
REGISTRE R
$H_R$
21
DETECTEUR
26
COMPARATEURS
27
25
COMMUTATEUR
31
29
28
32
LIGNE A DELAI
h
$H_2$
GENERATEURS
CIRCUIT MONOSTABLE
22
COMMUTATEUR
33
COMMUTATEUR
24
T
J
MEMOIRE
23
30
CONVERTISSEUR N-A
SON

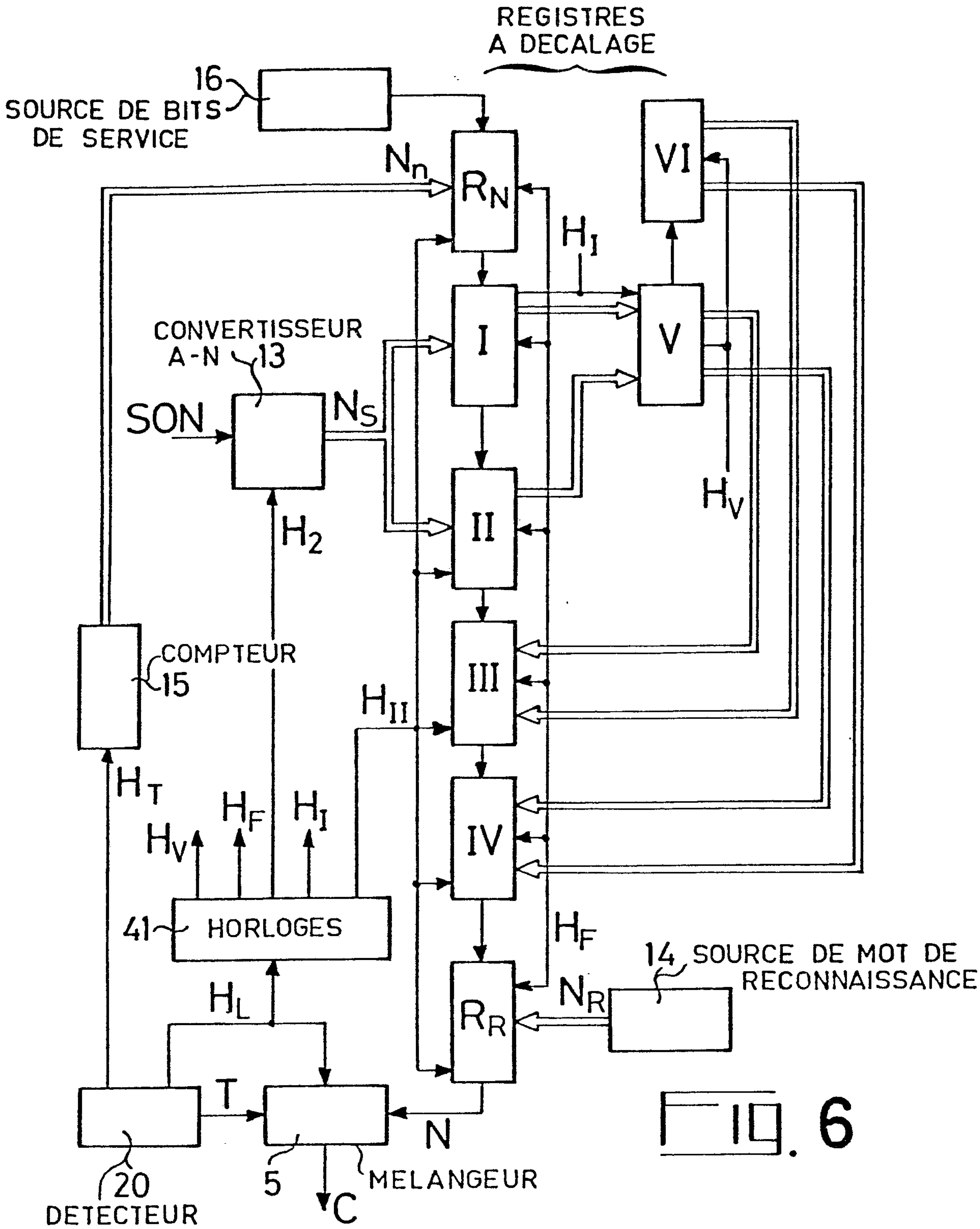
REGISTRES
A DECALAGE
16
SOURCE DE BITS
DE SERVICE
$N_n$
$R_N$
VI
$H_I$
I
V
CONVERTISSEUR
A-N 13
SON
$N_S$
II
$H_V$
$H_2$
COMPTEUR
15
III
$H_{II}$
$H_T$
$H_F$
$H_I$
$H_V$
IV
41
HORLOGES
$H_F$
14 SOURCE DE MOT DE
RECONNAISSANCE
$H_L$
$N_R$
$R_R$
T
N
20
DETECTEUR
5
C
MELANGEUR

FIG. 6

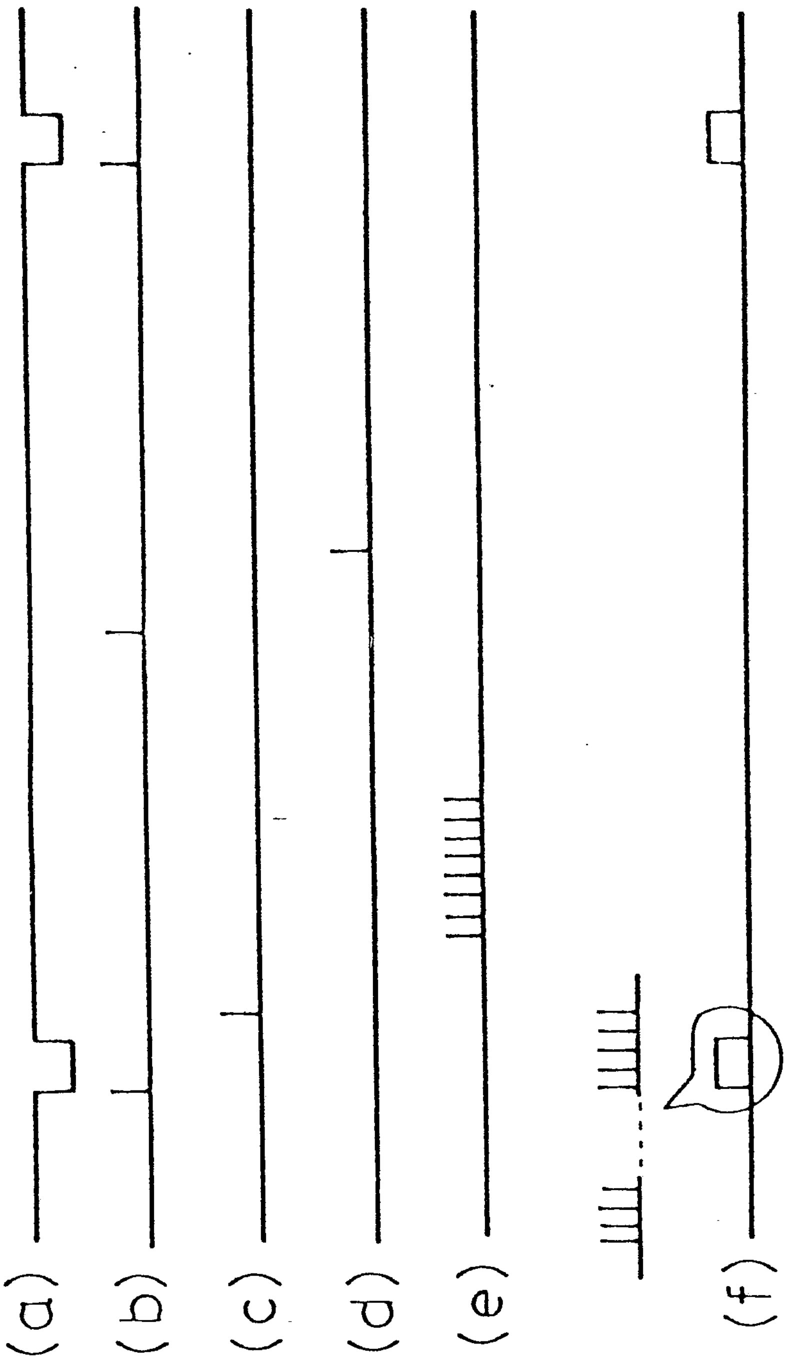


Fig. 7